(19) **Europäisches Patentamt European Patent Office Office européen des brevets**

(11) **EP 3 048 822 B1**

(12) **EUROPEAN PATENT SPECIFICATION**

(45) Date of publication and mention of the grant of the patent:
**06.06.2018 Bulletin 2018/23**

(21) Application number: **14774971.7**

(22) Date of filing: **21.02.2014**

(51) Int Cl.:
*H04W 4/08* (2009.01)     *H04W 8/22* (2009.01)
*H04L 29/14* (2006.01)

(86) International application number:
**PCT/CN2014/072406**

(87) International publication number:
**WO 2014/154072 (02.10.2014 Gazette 2014/40)**

(54) **MOBILITY MANAGEMENT METHOD, DEVICE, SYSTEM AND COMPUTER STORAGE MEDIUM**

MOBILITÄTSVERWALTUNGSVERFAHREN, VORRICHTUNG, SYSTEM UND COMPUTERSPEICHERMEDIUM

PROCÉDÉ, DISPOSITIF ET SYSTÈME DE GESTION DE LA MOBILITÉ, ET SUPPORT DE STOCKAGE INFORMATIQUE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.09.2013 CN 201310438094**

(43) Date of publication of application:
**27.07.2016 Bulletin 2016/30**

(73) Proprietor: **ZTE Corporation**
**Shenzhen, Guangdong 518057 (CN)**

(72) Inventors:
• **SUN, Aifang**
  **Shenzhen**
  **Guangdong 518057 (CN)**
• **CAO, Jianfu**
  **Shenzhen**
  **Guangdong 518057 (CN)**
• **LING, Zhihao**
  **Shenzhen**
  **Guangdong 518057 (CN)**
• **ZHANG, Zhifei**
  **Shenzhen**
  **Guangdong 518057 (CN)**
• **GAO, Chong**
  **Shenzhen**
  **Guangdong 518057 (CN)**
• **QI, Xuewen**
  **Shenzhen**
  **Guangdong 518057 (CN)**
• **BAO, Jian**
  **Shenzhen**
  **Guangdong 518057 (CN)**

(74) Representative: **Brevalex**
**95, rue d'Amsterdam**
**75378 Paris Cedex 8 (FR)**

(56) References cited:
**WO-A1-2013/104147    CN-A- 101 466 147**
**CN-A- 102 204 217    CN-A- 102 572 721**
**CN-A- 102 932 933    US-A1- 2013 189 951**

## Description

## TECHNICAL FIELD

The disclosure relates to a network management technology, and in particular to a mobility management method, device and system and a computer storage medium.

## BACKGROUND

With development of a network communication technology and continuous improvement of terminal manufacturing level, service experience requirements of users become broader and broader. Under a ubiquitous network condition, there may exist different terminal equipment around a user, and invoking different terminal equipment to cooperatively provide various kinds of required services for the user according to characteristics of the services and a personalized requirement of the user may effectively break a capability constraint of a single terminal and improve service experiences of the user.

In a conventional art, a mobility management technology for a terminal group mainly implements management over the terminal group from a network side, and terminals in the group are managed in a manner of arranging a manager or a management server on the network side. When the terminal group moves to a position where a network condition is poor or a position beyond network coverage, mobility management may not be continuously implemented on the terminal group, which may cause reduction in stability and continuity of mobility management.

In addition, for a single-point failure caused by a server failure, terminal energy exhaustion and the like, a single-point failure referring to a failure of a single unit in a system which causes a failure of the entire system and for which a redundancy measure cannot be taken, there is no effective solution provided in the conventional art, so that continuity of a service is influenced, and Quality of Service (QoS) and user experiences are lowered.

WO2013/104147A1 discloses a mobility management method for group terminals, comprising: a mobility management platform sending to the group terminals service call requests corresponding to all services, and determining, among terminals responding to the service call requests, service central points of the services; and the service central points configuring a terminal environment according to the service call requests that have been responded to, and uploading information of the configured terminal environment to the mobility management platform.

US 2013/189951A1 discloses a first mobility management entity (MME) device. which receives an attachment request that includes information associated with a user device. The first MME device creates a context for the user device based on the information, stores the context, and creates an optimized context based on the context, where a size of the optimized context is smaller than a size of the context. The first MME device also identifies a second MME device that is a backup for the first MME device, and transmits the optimized context to the second MME device.

## SUMMARY

In order to solve the existing technical problem, the embodiments of the disclosure provide a mobility management method, device and system and a computer storage medium, which may overcome influence of poor network performance on mobility management of a terminal group and provide a solution to a single-point failure problem, thereby improving QoS.

To this end, the technical solutions of the embodiment of the disclosure are implemented as follows.

An embodiment of the disclosure provides a mobility management method, which may include:

Mobility Management Equipment (MME) acquires service information from a service instruction after receiving the service instruction;

A wireless network accessed by each terminal in a terminal group is determined according to the acquired service information; and

a terminal in the terminal group is invoked to execute a service requested by a user according to the wireless network accessed by each terminal in the terminal group;

where the method further includes:

when currently-operating MME has a single-point failure, switching a current service and the terminal executing the service requested by the user to backup MME.

In an embodiment, the method may further include: before the step that the wireless network accessed by each terminal in the terminal group is determined, the MME sends an invoking request to each terminal in the terminal group, finds a terminal of which terminal capability meets a requirement of execution of the service requested by the user according to a response to the invoking request from said terminal, and waits to determine the accessed wireless network.

In an embodiment, the method may further include: before the step that the terminal in the terminal group is invoked to execute the service requested by the user, the MME sends a service issuing instruction to a network server, and receives service data issued by the network server.

In an embodiment, the method may further include: in case of service interruption of the terminal executing the service requested by the user in the terminal group, other terminals in the terminal group are invoked to continue executing the service requested by the user.

In an embodiment, the method may further include that: when currently-operating MME has a single-point failure, a current service and a terminal executing the service requested by the user are switched to backup MME.

In an embodiment, the step that the wireless network accessed by each terminal in the terminal group is determined may include:

matching degrees with current networks are calculated according to the acquired service information;

signal strength and time delay information of each wireless network are collected as acquired parameters;

a decision parameter for network accessing is acquired from the matching degrees and the acquired parameters based on a fuzzy logic theory; and

the wireless network accessed by each terminal is determined according to the decision parameter.

An embodiment of the disclosure further provides a computer storage medium having stored therein computer programs for executing the mobility management method described above.

An embodiment of the disclosure further provides MME comprising a service information acquisition module, a network resource allocation module and a terminal invoking module, in which:

the service information acquisition module may be configured to acquire service information from a service instruction after receiving the service instruction;

the network resource allocation module may be configured to determine a wireless network accessed by each terminal in a terminal group according to the service information acquired by the service information acquisition module; and

the terminal invoking module may be configured to invoke a terminal in the terminal group to execute a service requested by a user according to the wireless network accessed by each terminal in the terminal group, the wireless network accessed by each terminal in the terminal group being determined by the network resource allocation module;

where the MME is a working MME or a backup MME,

where the working MME is configured to, when a single-point failure occurs, send a replacement request to the at least one piece of backup MME, and switch a current service and a terminal executing a service requested by a user to the at least one piece of backup MME.

In an embodiment, the service information acquisition module may be further configured to, before the wireless network accessed by each terminal in the terminal group is determined, send an invoking request to each terminal in the terminal group, find a terminal of which terminal capability meets a requirement of execution of the service requested by the user according to a response to the invoking request from said terminal, and wait to determine the accessed wireless network.

In an embodiment, the service information acquisition module may further be configured to, before the terminal in the terminal group is invoked to execute the service requested by the user, send a service issuing instruction to a network server, and receive service data issued by the network server.

In an embodiment, the operation that the network resource allocation module determines the wireless network accessed by each terminal in the terminal group may include that:

matching degrees with current networks are calculated according to the acquired service information;

signal strength and time delay information of each wireless network are collected as acquired parameters;

a decision parameter for network accessing is acquired from the matching degrees and the acquired parameters based on a fuzzy logic theory; and

the wireless network accessed by each terminal is determined according to the decision parameter.

An embodiment of the disclosure further provides a mobility management system comprising the working MME in the embodiment of the disclosure, at least one piece of backup MME in the embodiment of the disclosure and at least two terminals, in which:

the at least one piece of backup MME may further be configured to return a response to the replacement request after receiving the replacement request from the working MME, acquire execution state information of the service requested by the user after it is determined that the at least one piece of backup MME is, reconfigure a terminal execution environment and network resource of the service requested by the user, and continue executing the service requested by the user; and

the at least two terminals may be configured to execute the service requested by the user after being invoked by the MME.

In an embodiment, when there are multiple pieces of backup MME, the working MME may further be configured to execute an MME selection algorithm to select new MME from the multiple pieces of backup MME.

According to the mobility management method, device and system and computer storage medium provided by the embodiment of the disclosure, the MME is arranged on a terminal side to manage the terminal group; the MME acquires the service information from the service instruction after receiving the service instruction; the wireless network accessed by each terminal in the terminal group is determined according to the acquired service information, and a terminal in the terminal group is invoked to execute the service requested by the user; in such a manner, mutual communication may be implemented through a local area network between terminal groups, constraints resulted from factors such as network signal strength, a coverage area and a network bandwidth may be effectively broken, and interference and influence of network performance on terminal mobility management may be eliminated; and when the terminals frequently join and quit the terminal group, registration signalling is only transmitted in the local area network between the terminal groups, so that occupation of the network bandwidth is effectively reduced, and service data issuing continuity is ensured.

Moreover, by means of installation of the MME on multiple terminals in the terminal group, when one piece of MME has a problem, the other MME may effectively continue executing the service of the user, so that the problem of service interruption caused by a single-point failure resulted from poor network signal, energy exhaustion and the like is effectively solved, service continuity may be remarkably improved, the QoS of the user may be improved, and a service experience of the user may further be improved.

**BRIEF DESCRIPTION OF THE DRAWINGS**

Fig. 1 is a topological structure diagram of MME and a terminal group on a terminal side according to an embodiment of the disclosure;

Fig. 2 is an implementation flowchart of a mobility management method according to an embodiment of the disclosure;

Fig. 3 is a flowchart of invoking of a terminal according to a specific embodiment of the disclosure;

Fig. 4 is a flowchart of replacement of MME according to an embodiment of the disclosure;

Fig. 5 is a diagram of an MME selection algorithm according to an embodiment of the disclosure;

Fig. 6 is a structure diagram of MME according to an embodiment of the disclosure; and

Fig. 7 is a structure diagram of a mobility management system according to an embodiment of the disclosure.

**DETAILED DESCRIPTION**

In each embodiment of the disclosure: MME is arranged on a terminal side; the MME acquires service information from a service instruction after receiving the service instruction; and a wireless network accessed by each terminal in a terminal group is determined according to the acquired service information, and a terminal in the terminal group is invoked to execute a service requested by a user.

Here, there may be one or more pieces of MME, and each piece of MME corresponds to a terminal group, is connected with each terminal in the terminal group, and determines a wireless network accessed by each terminal in the terminal group.

Herein, the service instruction at least includes the service information such as the number of services, service type and service priority.

Herein, the step that the terminal in the terminal group is invoked to execute the service requested by the user includes that: one or more terminals of which terminal capabilities meet a requirement of execution of the service requested by the user are found, and the corresponding terminals are invoked to cooperatively work.

The technical solutions of the embodiment of the disclosure are further described in detail below with reference to the drawings and specific embodiments.

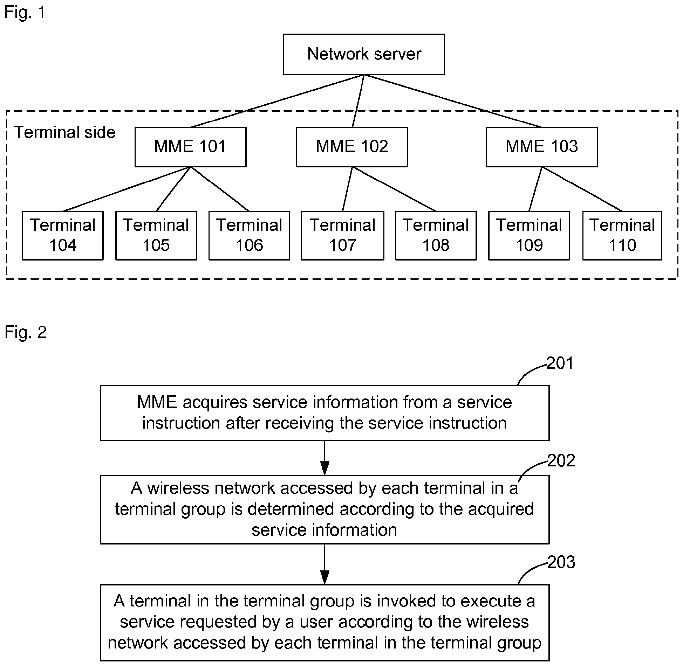

In the embodiment of the disclosure, the MME is located on the terminal side, and may be arranged on multiple pieces of terminal equipment in the terminal group, as shown in Fig. 1 which is a topological structure diagram of MME and a terminal group on a terminal side according to an embodiment of the disclosure. In Fig. 1, one end of each of MME 101, MME 102 and MME 103 is connected with a network server, and the other end is connected with multiple terminals respectively, for example: MME 101 is connected with terminal 104, terminal 105 and terminal 106; MME 102 is connected with terminal 107 and terminal 108; MME 103 is connected with terminal 109 and terminal 110; and MME 101, MME 102 and MME 103 are configured to determine the wireless networks accessed by the terminals connected with them respectively.

Fig. 2 is an implementation flowchart of a mobility management method according to an embodiment of the disclosure, and as shown in Fig. 2, the mobility management method according to the embodiment of the disclosure includes the following steps:
Step 201, MME acquires service information from a service instruction after receiving the service instruction.

Here, the service instruction is from a network server, and the network server sends the service instruction to the MME on a terminal side after receiving a service request initiated by a user.

Herein, the service information includes, but not limited to, the number of services, service type and service priority.

Step 202, a wireless network accessed by each terminal in a terminal group is determined according to the acquired service information.

Specifically, the MME calculates own matching degrees with current networks by virtue of a network matching degree algorithm in the conventional art according to the service information such as the number of services, the service type and the service priority, collects signal strength and time delay information of each wireless network as acquired parameters, acquires a decision parameter for network accessing from the matching degrees and the acquired parameters based on a fuzzy logic theory, and determines the wireless networks accessed by the terminals according to the decision parameter.

Step 203, a terminal in the terminal group is invoked to execute a service requested by the user.

Here, the MME determines and invokes one or more terminals with adapted terminal capabilities in the terminal group to execute the service requested by the user together according to the received service information such as the service type, the number of services and the service priority.

An embodiment of the disclosure further provides a computer storage medium having stored therein computer programs for executing the mobility management method according to the disclosure.

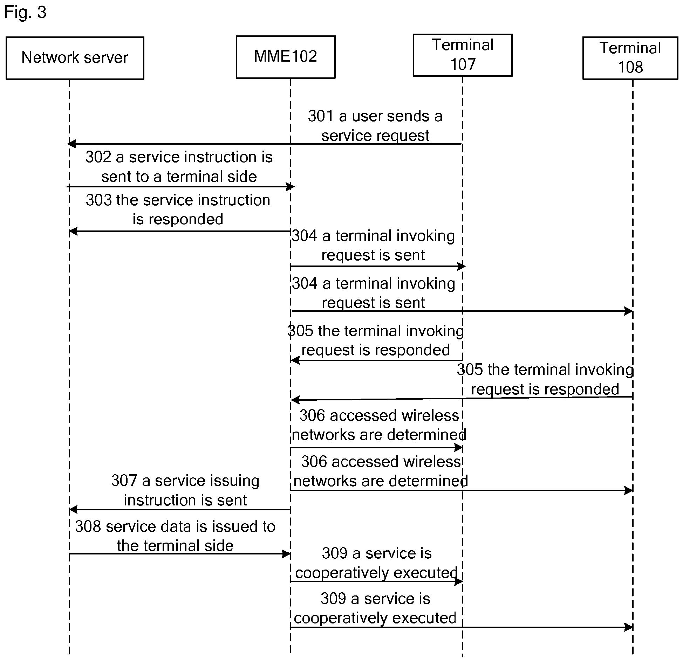

Fig. 3 is a flowchart of invoking of a terminal according to a specific embodiment of the disclosure. In the embodiment, the disclosure is described in detail by taking MME 102 shown in Fig. 1 as an example, and in Fig. 1, MME 102 is connected with terminal 107 and terminal 108. As shown in Fig. 3, the mobility management method for a terminal group in the embodiment includes the following steps:
Step 301, a user initiates a service request to a network server through a terminal used by the user.

Here, the terminal used by the user is terminal 107.

Step 302, the network server sends a service instruction to MME 102.

Here, the network server sends the service instruction to MME 102 on a terminal side after receiving the service request initiated by the user, and the service instruction should include service information such as service type, the number of services and service priority, herein the service type may include a video service, a voice service, a short message service and the like; and the service priority may be high, middle and low.

Step 303, MME 102 responds the service instruction sent by the network server.

Here, MME 102 performs matching of information such as the service type and the service priority after receiving the service instruction sent by the network server, and responds to the service instruction of the network server if the information is successfully matched.

Step 304, MME 102 sends an invoking request to each terminal in the terminal group that is managed by MME 102.

Here, MME 102 sends the service invoking request to all terminals in the terminal group that is managed by MME 102, and in the embodiment, all the terminals include: terminal 107 and terminal 108, that is, the service invoking request is sent to terminal 107 and terminal 108, herein the service invoking request should include the service information such as the service type, the number of services and the service priority, herein the service type may include a video service, a voice service, a short message service and the like; and the service priority may be high, middle and low.

Step 305, a terminal meeting a requirement responds to the terminal invoking request from MME 102.

Here, the terminals receiving the service invoking request decide whether to respond to the invoking request or not according to their own task execution conditions and the acquired service information such as the service type and the service priority, and response information should include capability information of the terminals.

Specific decision criteria are as follows:

(1) it is decided whether the capability of a terminal matches with the service type, if NO, the terminal denies to respond to the invoking request; and if YES, the next step is executed;

(2) it is decided whether the terminal is in a working state, if the terminal is in an idle state, the terminal responds to the invoking request; and if the terminal is in the working state, the next step is executed; and

(3) the priority of a current service of the terminal is compared with the priority of a requested service, the invoking request is responded if the priority of the requested service is higher, and if the priority of the requested service is the same as or lower than that of the current service, the invoking request is denied to be responded.

Step 306, MME 102 determines terminals executing the service requested by the user, and determines accessed wireless networks for the terminals executing the service requested by the user.

Here, MME 102 acquires a capability list of each terminal according to confirmation information returned by the terminals, configures a terminal execution environment of the service, determines accessed wireless networks for each terminal and formulates a shunt transmission strategy for the service.

Here, MME 102 may determine all the terminals that respond to the invoking request as terminals executing the service requested by the user, and may also determine, as required, a part of the terminals that respond to the invoking request as terminals executing the service requested by the user.

A specific manner for allocating wireless network resources may be as follows: the service information such as the service type and the service priority is extracted, and matching degrees with current networks are calculated by virtue of a network matching degree algorithm in the conventional art according to the acquired service information; and parameters such as signal strength and time delays of each wireless network are collected, and these parameters are weighted.

A decision parameter for network accessing is acquired from the matching degrees and the acquired parameters based on a fuzzy logic theory, and the wireless network resources are allocated according to the decision parameter, that is: the wireless network accessed by each terminal is determined. For example: the wireless network accessed by each terminal may be determined on the basis of fuzzy logic and neural network technologies by adopting a particle swarm optimization fuzzy neuron-based network access algorithm.

Specifically, for example, two wireless heterogeneous networks, i.e. a 3-Generation (3G) network and a Wireless Fidelity (WiFi) network, are represented as network 1 and network 2 respectively, $C_1$ is a signal strength difference between network 1 and network 2, $C_2$ is a time delay difference between network 1 and network 2, $C_3$ is a difference of matching degrees of the service type with network 1 and network 2, $C_1$, $C_2$ and $C_3$ are taken as input parameters of a fuzzy neuron, a fuzzy decision factor $E$ may be obtained, and the fuzzy decision factor $E$ meets the following expression:

$$E = \Phi \sum_{i=1}^{3} w_i C_i \, ,$$

where $\Phi$ is a neuron gain; and $W_i$ is a weighting coefficient corresponding to the input parameter $C_i$. Network access allocation is implemented according to a value of the fuzzy decision factor $E$. When $E<1$, network 1 is accessed; when $E>1$, network 2 is accessed; and when $E=1$, the network with a higher network service matching degree is selected for access.

Step 307, MME 102 sends a service issuing instruction to the network server.

Here, after the terminal execution environment of the service is configured, MME 102 sends a service data request message to the network server, and the data request message should include terminal execution environment information of the service.

Step 308, the network server issues service data to the terminal side.

Here, after receiving the service data request message sent from MME 102, the network server sends the service data to each terminal executing the service requested by the user according to the terminal execution environment information in the request message.

Step 309, MME 102 cooperates with each determined terminal to execute the service requested by the user.

In a practical service execution process, a single-point failure caused by energy exhaustion or own failure of a terminal easily occurs, and in case of service interruption caused by damage or energy exhaustion of a certain terminal executing the service requested by the user in the terminal group, the MME may send an invoking request to the other terminals meeting the capability requirement in the terminal group to continue executing the service requested by the user.

Particularly, when a single-point failure occurs to MME, a serious service interruption may occur. Therefore, the embodiment of the disclosure discloses a MME replacement method from the point of ensuring service continuity, and when the MME fails, service continuity may be ensured, and the best service experience may be provided for the user.

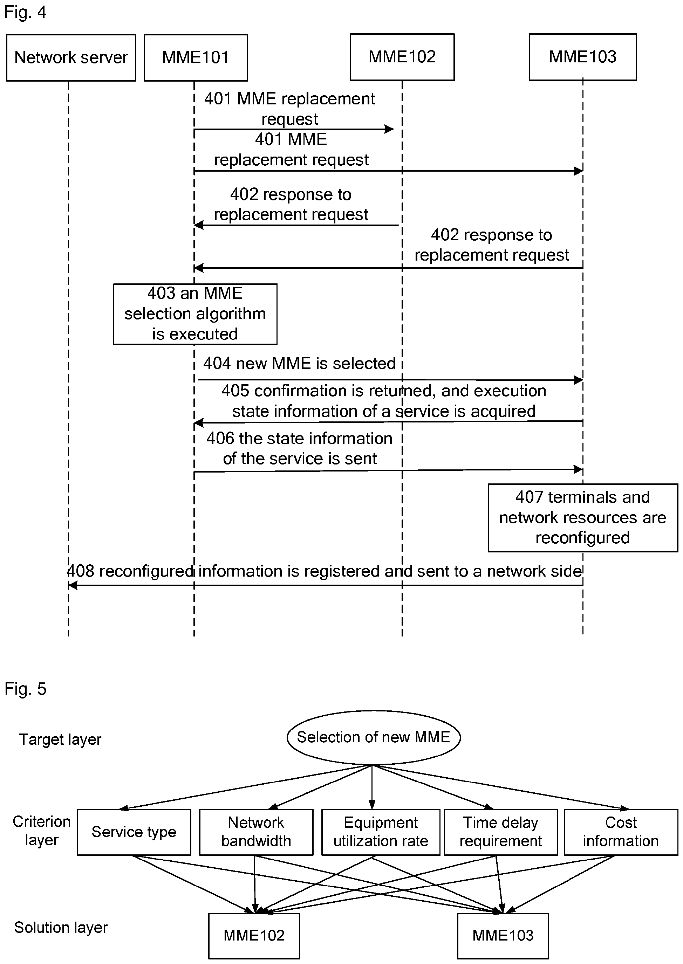

Fig. 4 is a flowchart of replacement of MME according to an embodiment of the disclosure. In the embodiment, the disclosure is further described in detail by taking the condition that MME 101 shown in Fig. 1 is working MME and MME 102 and MME 103 are backup MME as an example. The MME replacement process specifically includes the following steps:

Step 401, MME 101 sends an MME replacement request to MME 102 and MME 103.

Here, MME 101 has a single-point failure, triggers the MME replacement process, and sends the replacement request to the other MME in a terminal group.

Triggering conditions for the MME replacement flow include:

(1) when a terminal with MME requires to quit the group due to a factor of space, distance and the like, the replacement process is triggered;

(2) when energy of the MME is lower than a preset threshold, the replacement process is triggered; and

(3) when an index, such as signal strength and a bandwidth, of the MME is lower than a certain threshold and may not meet a service requirement, the replacement process is triggered.

Step 402, MME 102 and MME 103 return responses to the replacement request to MME 101.

Here, MME 102 and MME 103 respond to the replacement request from MME 101 after receiving the MME replacement request, and notify MME 101 to execute the MME replacement process.

Step 403, MME 101 executes an MME selection algorithm.

Here, MME 101 starts executing the MME selection algorithm after receiving the responses, and a specific implementation flow of the MME selection algorithm is shown in Fig. 5.

Step 404, MME 101 selects MME 103 as new MME.

Here, MME 101 selects MME 103 as the new MME after finishing executing the MME selection algorithm, and sends selection information to MME 103 to notify MME 103 that it is selected as the new MME.

Step 405, MME 103 returns confirmation information, and acquires execution state information of a service.

Here, MME 103 returns the confirmation information to MME 101 to agree to replace MME 101 as the new MME to continue executing the service, and simultaneously sends related request information to MME 101 to acquire the execution state information of the related service, the execution state information of the service including: service information such as service type, the number of services and service priority, service data downloading information, terminal execution environment information and the like.

Step 406, MME 101 sends the state information of the service.

Here, MME 101 sends the state information of the service to MME 103 after receiving the confirmation information sent by MME 103, and switches the service and terminals executing the service requested by a user to MME 103.

Step 407, MME 103 reconfigures the terminals and network resources.

Here, MME 103 reconfigures a terminal execution environment and network resources of the service according to the received execution state information of the service.

Step 408, MME 103 registers and sends reconfigured information to a network server.

Here, MME 103 sends the reconfigured terminal execution environment and network resource information of the service to the network server, and performs registration on a network side, and the network server issues the service data according to the received information.

Fig. 5 is a diagram of an MME selection algorithm according to an embodiment of the disclosure. When an MME replacement process is executed, the algorithm is configured to select new MME to implement continuous execution of a service to prevent a condition such as service interruption, and specific algorithm contents are as follows:

MME 101 selects the new MME from MME candidates to implement continuous execution of the service, and the new MME reconfigures a terminal execution environment and network resource of the service, and continues executing the service requested by a user.

In the embodiment of the disclosure, MME 101 selects the new MME from the MME candidates to continue executing the service requested by the user by adopting a hierarchical analysis method, and the target is selection of the new MME; the hierarchical analysis method includes a target layer, a criterion layer and a solution layer; the solution layer includes MME candidates, such as MME 102 and MME 103; the criterion layer includes each reference criterion based on which the new MME is selected, for example: the service type, a network bandwidth, an equipment utilization rate, a time delay requirement and cost information; and the target layer is the selected new MME.

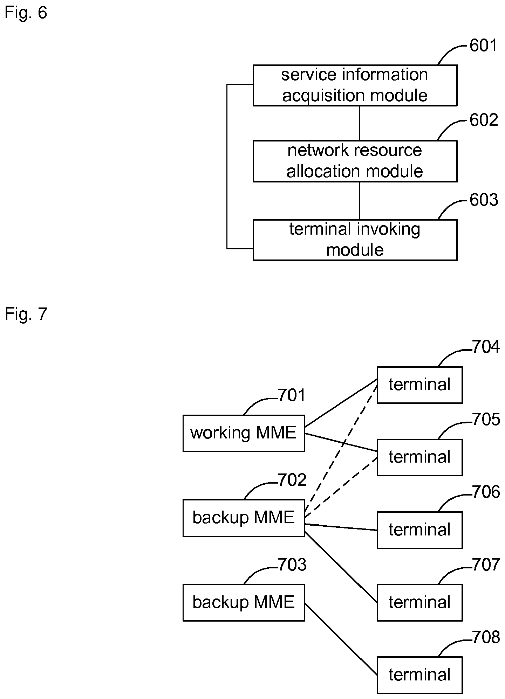

An embodiment of the disclosure further discloses MME, Fig. 6 is a structure diagram of MME according to an embodiment of the disclosure, and as shown in Fig. 6, the MME includes a service information acquisition module 601, a network resource allocation module 602 and a terminal invoking module 603, in which:

the service information acquisition module 601 is configured to acquire service information from a service instruction after receiving the service instruction;

the network resource allocation module 602 is configured to determine a wireless network accessed by each terminal in a terminal group according to the service information acquired by the service information acquisition module 601; and

the terminal invoking module 603 is configured to invoke a terminal in the terminal group to execute a service requested by a user according to the wireless network accessed by each terminal in the terminal group, the wireless network accessed by each terminal in the terminal group being determined by the network resource allocation module 602.

Herein, the service information includes, but not limited to, the number of services, service type and service priority.

Preferably, the service information acquisition module 601 is further configured to, before the wireless network accessed by each terminal in the terminal group is determined, send an invoking request message to each terminal in the terminal group, find a terminal of which terminal capability meets a requirement of execution of the service requested by the user according to a response to the invoking request from said terminal, and wait to determine the accessed wireless network.

Preferably, the service information acquisition module 601 is further configured to, before the terminal in the terminal group is invoked to execute the service requested by the user, send a service issuing instruction to a network server, and receive service data issued by the network server.

Preferably, the service information acquisition module 601 is further configured to monitor an execution condition of the service in a service execution process, and enable cooperation of the other terminals in the group to continue executing the service requested by the user in case of service interruption caused by terminal damage, energy exhaustion and the like.

Specifically, the network resource allocation module 602 calculates matching degrees with current networks by virtue of a network matching degree algorithm in the conventional art according to the acquired service information such as the number of services, the service type and the service priority, collects signal strength and time delay information of each wireless network as acquired parameters, acquires a decision parameter for network accessing from the matching degrees and the acquired parameters based on a fuzzy logic theory, and determines the wireless networks accessed by the terminals according to the decision parameter.

Preferably, the network resource allocation module 602 is further configured to formulate a strategy for selecting and switching between different access points and different networks when the terminals in the group move in a large range among different heterogeneous networks.

Specifically, the network resource allocation module 602 determines the wireless network accessed by each terminal on the basis of fuzzy logic and neural network technologies by adopting a particle swarm optimization fuzzy neuron-based network access algorithm.

Specifically, for example, two wireless heterogeneous networks, i.e. a 3G network and a WiFi network, are represented as network 1 and network 2 respectively, $C_1$ is a signal strength difference between network 1 and network 2, $C_2$ is a time delay difference between network 1 and network 2, $C_3$ is a difference of matching degrees of the service type with network 1 and network 2, $C_1$, $C_2$ and $C_3$ are taken as input parameters of a fuzzy neuron, a fuzzy decision factor $E$ may be obtained, and the fuzzy decision factor $E$ meets the following expression:

$$E = \Phi \sum_{i=1}^{3} W_i C_i,$$

where $\Phi$ is a neuron gain; and $W_i$ is a weighting coefficient corresponding to the input parameter $C_i$. Network access allocation is implemented according to a value of the fuzzy decision factor $E$. When $E_{<1}$, network 1 is accessed; when $E>1$, network 2 is accessed; and when $E=1$, the network with a higher network service matching degree is selected for access.

Here, the MME determines and invokes one or more terminals with adapted terminal capabilities in the terminal group to execute the service requested by the user together according to the received service information such as the service type, the number of services and the service priority.

Specifically, the terminal invoking module 603 is further configured to configure a service execution environment according to received information such as the service type, the number of services, the service priority and a user preference, and replace terminal equipment to implement continuous execution of the service on the premise of ensuring service continuity in case of service interruption caused by terminal damage, energy exhaustion and the like.

Herein, during a practical application, the information acquisition module 601, network resource allocation module 602 and terminal invoking module 603 in the MME may be implemented by a Central Processing Unit (CPU), or Digital Signal Processor (DSP) or Field-Programmable Gate Array (FPGA) in the MME.

The embodiment of the disclosure further discloses a mobility management system, and as shown in Fig. 7, the system includes working MME 701, at least one piece of backup MME such as backup MME 702 and backup MME 703, and at least two terminals such as terminal 704, terminal 705, terminal 706, terminal 707 and terminal 708.

Herein, each piece of MME corresponds to a terminal group, is connected with each terminal in the terminal group, and determines a wireless network accessed by each terminal in the terminal group. For example: the working MME 701 is connected with a terminal 704 and a terminal 705; the backup MME 702 is connected with a terminal 706 and a terminal 707; the backup MME 703 is connected with a terminal 708; and the MME 701, the MME 702 and the MME 703 are configured to determine the wireless networks accessed by the terminals connected therewith.

Herein, the working MME 701, the backup MME 702 and the backup MME 703 may be any structural and functional MME shown in Fig. 6. Specifically, the working MME 701 is configured to acquire service information from a service instruction after receiving the service instruction, determine the wireless network accessed by each terminal and invoke a terminal in a terminal group to execute a service requested by a user.

Herein, the service information includes, but not limited to the number of services, service type and service priority; and specifically, the MME calculates matching degrees with current networks by virtue of a network matching degree algorithm in the conventional art according to the acquired service information such as the number of services, the service type and the service priority, collects signal strength and time delay information of each wireless network as acquired parameters, acquires a decision parameter for network accessing from the matching degrees and the acquired parameters based on a fuzzy logic theory, and determines the wireless networks accessed by the terminals according to the decision parameter.

Here, the MME determines and invokes one or more terminals with adapted terminal capabilities in the terminal group to execute the service requested by the user together according to the received service information such as the service type, the number of services and the service priority.

The working MME 701 is further configured to send an invoking request to the terminals in the terminal group, find a terminal of which terminal capability meets a requirement of execution of the service requested by the user according to a response to the invoking request from said terminal, and wait to determine the accessed wireless network; send a service issuing instruction to a network server, and receive service data issued by the network server; and monitor an execution condition of the service in a service execution process.

In case of service interruption, caused by damage or energy exhaustion, of a certain terminal executing the service in the terminal group, the working MME 701 may send an invoking request to the other terminals meeting a capability requirement in the terminal group to continue executing the service requested by the user.

Preferably, the working 701 is further configured, when a single-point failure occurs, send a replacement request to the backup MME 702 or the backup MME 703, and switch the current service and the terminals executing the service requested by the user to the backup MME; and

correspondingly, the backup MME 702 or the backup MME 703 is further configured to return a response to the replacement request after receiving the replacement request from the working MME 701, acquire service execution state information after it is determined that it is selected, reconfigure a terminal execution environment and network resource of the service requested by the user, and continue executing the service requested by the user.

When there are multiple pieces of backup MME, the working MME 701 is further configured to execute an MME selection algorithm to select new MME from the multiple pieces of backup MME.

For example, when the single-point failure occurs to the working MME 701, an MME replacement process is triggered, specifically including the following replacement steps:

the working MME 701 sends the replacement request to all the backup MME such as the backup MME 702 and the backup MME 703;

the working MME 701 receives responses to the replacement request from the backup MME 702 and the backup MME 703, and starts the MME selection algorithm to select the backup MME consistent with a condition, such as the backup MME 702, as replacement MME; and

the current service and the terminal 704 and terminal 705 executing the service requested by the user are switched to the backup MME such as the backup MME 702, as shown by a dotted line connection in Fig. 7, to ensure service continuity.

The above are merely preferred embodiments of the disclosure and not intended to limit the scope of protection of the disclosure.

## INDUSTRIAL APPLICABILITY

According to the embodiment of the disclosure, the MME is arranged on the terminal side to manage the terminal group, and the MME acquires the service information from the service instruction after receiving the service instruction; the wireless network accessed by each terminal in the terminal group is determined according to the acquired service information, and a terminal in the terminal group is invoked to execute the service requested by the user; in such a manner, constraints resulted from factors such as network signal strength, a coverage area and a network bandwidth may be effectively broken, interference and influence of network performance on terminal mobility management may be eliminated, and service data issuing continuity is ensured.

## Claims

1. A mobility management method, **characterized in that**, the method comprises:

acquiring, by a working Mobility Management Equipment, MME, service information from a service instruction after receiving the service instruction (201); determining a wireless network accessed by each terminal in a terminal group according to the acquired service information (202); and invoking a terminal in the terminal group to execute a service requested by a user according to the wireless network accessed by each terminal in the terminal group (203); wherein the method further comprises: when the working MME has a single-point failure, the working MME sending (401) a replacement request to at least one backup MME and switching (406) a current service and the terminal executing the service requested by the user to the at least one backup MME.

2. The method according to claim 1, further comprising: before (202) determining the wireless network accessed by each terminal in the terminal group, sending, by the MME, an invoking request to each terminal in the terminal group, finding a terminal of which terminal capability meets a requirement of execution of the service requested by the user according to a response to the invoking request from said terminal, and waiting to determine the accessed wireless network.

3. The method according to claim 2, further comprising: before (203) invoking the terminal in the terminal group to execute the service requested by the user, sending, by the MME, a service issuing instruction to a network server, and receiving service data issued by the network server.

4. The method according to claim 1, further comprising: in case of service interruption of the terminal executing the service requested by the user in the terminal group, invoking other terminals in the terminal group to continue executing the service requested by the user.

5. The method according to claim 1, wherein (202) determining the wireless network accessed by each terminal in the terminal group comprises:

   calculating matching degrees with current networks according to the acquired service information;
   collecting signal strength and time delay information of each wireless network as acquired parameters;
   acquiring a decision parameter for network accessing from the matching degrees and the acquired parameters based on a fuzzy logic theory; and
   determining the wireless network accessed by each terminal according to the decision parameter.

6. Mobility Management Equipment, MME, **characterized in that**, the MME comprises: a service information acquisition module (601), a network resource allocation module (602) and a terminal invoking module (603), wherein
   the service information acquisition module (601) is configured to acquire service information from a service instruction after receiving the service instruction;
   the network resource allocation module (602) is configured to determine a wireless network accessed by each terminal in a terminal group according to the service information acquired by the service information acquisition module (601); and
   the terminal invoking module (603) is configured to invoke a terminal in the terminal group to execute a service requested by a user according to the wireless network accessed by each terminal in the terminal group, the wireless network accessed by each terminal in the terminal group being determined by the network resource allocation module (602);
   wherein the MME is a working MME or a backup MME,
wherein the working MME is configured to, when a single-point failure occurs, send a replacement request to the at least one piece of backup MME, and switch a current service and a terminal executing a service requested by a user to the at least one piece of backup MME.

7. The MME according to claim 6, wherein the service information acquisition module (601) is further configured to, before the wireless network accessed by each terminal in the terminal group is determined, send an invoking request to each terminal in the terminal group, find a terminal of which terminal capability meets a requirement of execution of the service requested by the user according to a response to the invoking request from said terminal, and wait to determine the accessed wireless network.

8. The MME according to claim 7, wherein the service information acquisition module (601) is further configured to, before the terminal in the terminal group is invoked to execute the service requested by the user, send a service issuing instruction to a network server, and receive service data issued by the network server.

9. The MME according to claim 6, wherein the operation that the network resource allocation module (602) determines the wireless network accessed by each terminal in the terminal group comprises:

   calculating matching degrees with current networks according to the acquired service information;
   collecting signal strength and time delay information of each wireless network as acquired parameters;
   acquiring a decision parameter for network accessing from the matching degrees and the acquired parameters based on a fuzzy logic theory; and
   determining the wireless network accessed by each terminal according to the decision parameter.

10. A mobility management system, comprising:

    - the working Mobility Management Equipment, MME, according to any one of claims 6 to 9, at least one piece of backup MME according to any one of claims 6 to 9 and at least two terminals, wherein

    the at least one piece of backup MME is further configured to return a response to the replacement request after receiving the replacement request from the working MME, acquire execution state information of the service requested by the user after it is determined that the at least one piece of backup MME is selected, reconfigure a terminal execution environment and network resource of the service requested by the user, and continue executing the service requested by the user; and

the at least two terminals are configured to execute the service requested by the user after being invoked by the working MME or the backup MME.

11. The system according to claim 10, wherein, when there are multiple pieces of backup MME, the working MME is further configured to execute an MME selection algorithm to select new MME from the multiple pieces of backup MME.

12. A computer storage medium having stored therein computer programs for executing the mobility management method according to any one of claims 1 to 5.

**Patentansprüche**

1. Ein Mobilitätsverwaltungsverfahren, **dadurch gekennzeichnet, dass** die Methode folgendes umfasst:

   die Datenerfassung durch ein funktionierendes Mobilitätsverwaltungsverfahren, MME, die Erfassung von Serviceinformation durch die Serviceanleitung, nach Erhalt der Betriebsanleitung (201);
   durch die Ermittlung eines drahtlosen Netzwerkes, dessen Zugriff über jedes Terminal in einer Terminalgruppe gemäss der erforderlichen Serviceinformation erfolgt (202); und
   durch den Aufruf eines Terminals einer Terminalgruppe zur Ausführung einer Serviceleistung, die vom Nutzer dem drahtlosen Netzwerk entsprechend durch Zugriff über jedes Terminal in der Terminalgruppe angefordert wird (203);
   worin das Verfahren Weiteres umfasst:
   wenn die funktionierende MME eine Schwachstelle aufweist, sendet das funktionierende MME (401) eine Ersatzanfrage zu mindestens einem Backup MME und schaltet (406) zu einem laufenden Service um sowie das Terminal, das den vom Nutzer erfragten Service ausführt, zu mindestens einem Backup MME.

2. Das Verfahren nach Patentanspruch 1 umfasst: vor (202) der Ermittlung des drahtlosen Netzwerkes, auf das durch jedes Terminal in der Terminalgruppe zugegriffen wird, sendet, durch das MME, an jedes Terminal in der Terminalgruppe einen Serviceaufruf, zum Auffinden eines Terminals, dessen Leistungsfähigkeit den Anforderungen des Servicebedarfs des Nutzers gemäss der Response des Ausführungsantrags des besagten Terminals angepasst ist und die Ermittlung des Netzwerkzugriffs erwartet.

3. Das Verfahren nach Patentanspruch 2 umfasst: vor (203) dem Aufruf des Terminals zur Ausführung der vom Nutzer geforderten Serviceleistung in der Terminalgruppe, sendet durch das MME einen Service mit Erteilung einer Anweisung zum Netzwerk-Server und erhält die Servicedaten, die vom Netzwerk-Server erstellt werden.

4. Das Verfahren nach Patentanspruch 1 umfasst: im Falle einer Betriebs-Unterbrechung des Terminals der Terminalgruppe, das den vom Nutzer erforderten Service ausführt, werden andere Terminale in der Terminalgruppe aufgerufen, um den vom Nutzer erforderten Service auszuführen.

5. Das Verfahren nach Patentanspruch 1, in dem (202) das drahtlose Netzwerk, auf das jedes Terminal in der Terminalgrupppe zugreift, ermittelt wird, umfasst:

   die Berechnung der Anpassungsstufen mit den laufenden Netzwerken gemäss der erforderlichen Serviceinformation;
   die Erfassung der Signalstärke sowie der Verzögerungszeitinformation jedes kabellosen Netzwerkes gemäss der ermittelten Parameter;
   die Beschaffung eines Entscheidungsparameters für den Zugriff des Netzwerks gemäss der Berechnung der Anpassungsstufen sowie der ermittelten Parameter basierend auf einer Fuzzy-Logik-Theorie; und
   die Ermittlung des kabellosen Netzwerkes, auf das jedes Terminal gemäss der Entscheidungsparameter zugreift.

6. Das Mobilitätsverwaltungsverfahren, MME, **dadurch gekennzeichnet, dass** das MME folgendes umfasst: ein Serviceinformations-Erfassungsmodul (601), ein Netzwerkressourcenmodul (602) und ein Terminal-Aufrufmodul (603), wobei
   das Serviceinformations-Erfassungsmodul (601) dazu konfiguriert ist, um Serviceinformation durch die Serviceanleitung nach Erhalt der Betriebsanleitung zu ermitteln;
   das Netzwerkressourcenmodul (602) ist so konfiguriert, um ein kabelloses Netzwerk festzulegen, dass von jedem Terminal in der Terminalgruppe gemäss der Serviceinformationen, die vom Serviceinformations-Erfassungsmodul (601) ermittelt werden, zugegriffen wird; und
   das Terminal-Aufrufmodul (603) ist dazu konfiguriert, um ein Terminal in der Terminalgruppe aufzurufen, um einen vom Nutzer erforderten Service dem drahtlosen Netzwerk, auf das jedes Terminal in der Terminalgruppe zugreift, das drahtlose Netzwerk, auf das jedes Terminal in der Terminalgruppe zugreift, das vom Netzwerkressourcenmodul (602) ermittelt wird, entsprechend auszuführen;

wobei das MME ein laufendes MME oder ein Backup MME ist,

wobei das laufende MME so konfiguriert ist, dass im Falle einer Schwachstelle eine Ersatzanfrage mindestens zu einem Backup MME sendet und zu einem laufenden Service umschaltet sowie zu einem Terminal, das die Serviceanfrage des Nutzers durch mindestens ein Backup MME ausführt.

7. Das Mobilitätsverwaltungsverfahren gemäss Patentanspruch 6, in dem das Serviceinformations-Erfassungsmodul (601) des Weiteren so konfiguriert ist, dass bevor das drahtlose Netzwerk, auf das jedes Terminal in der Terminalgruppe zugreift, festgelegt ist, einen Serviceaufruf an jedes Terminal in der Terminalgruppe sendet, ein Terminal findet, dessen Terminal-Leistungsfähigkeit den Anforderungen der Serviceausführung des Nutzers gemäss der Response des Serviceaufrufs des besagten Terminals entspricht, um den Zugriff auf das drahtlose Netzwerk abzuwarten.

8. Das Mobilitätsverwaltungsverfahren gemäss Patentanspruch 7, wobei das Serviceinformations-Erfassungsmodul (601) des Weiteren so konfiguriert ist, dass, bevor das Terminal in der Terminalgruppe durch den Nutzer dazu aufgerufen wird, den Service auszuführen, eine Wartungsanweisung zu einem Netzwerkserver sendet und ausgegebene Servicedaten vom Netzwerkserver erhält.

9. Das Mobilitätsverwaltungsverfahren gemäss Patentanspruch 6, wobei der Vorgang, in dem das Netzwerkressourcenmodul (602) das drahtlose Netzwerk, auf das jedes Terminal in der Terminalgruppe zugreift, festgelegt, folgendes umfasst:

die Berechnung der Anpassungsstufen der laufenden Netzwerke gemäss der erforderlichen Serviceinformation;
die Erfassung der Signalstärke sowie der Verzögerungszeitinformation jedes drahtlosen Netzwerk gemäss der erforderlichen Parameter;
die Beschaffung eines Entscheidungsparameters für den Zugriff des Netzwerks gemäss der Berechnung der Anpassungsstufen sowie der ermittelten Parameter basierend auf einer Fuzzy-Logik-Theorie; und
die Ermittlung des kabellosen Netzwerkes, auf das jedes Terminal gemäss der Entscheidungsparameter zugreift.

10. Ein Mobilitätsmanagement-System, umfassend:

das Mobilitätsverwaltungsverfahren, MME, gemäss jedem Anspruch von 6 bis 9, mindestens einem Backup MME, gemäss jedem Anspruch von 6 bis 9 und zumindest zwei Terminalen, wobei

das Mindestbackup MME des Weiteren so konfiguriert ist, sodass eine Response auf die Ersatzanfrage nach Erhalt der Ersatzanfrage des laufenden MME gesandt wird, die Ausführungs-Statusinformation der vom Nutzer erforderten Serviceleistung, nach der Festlegung von zumindest einem Backup MME, eine Neukonfigurierung der Terminal-Ausführungsumgebung sowie der Netzwerk-Ressourcen der vom Nutzer geforderten Serviceleistung und eine kontinuierliche Weiterführung der vom Nutzer gewünschten Leistung erfolgt; und

dass zumindest zwei Terminale so konfiguriert sind, um die vom Nutzer gewünschte Serviceleistung nach Aufruf durch das laufende MME oder den Backup MME auszuführen.

11. Das System nach Patentanspruch 10, in dem, sollten mehrere Backup MME existieren, das laufende MME des Weiteren so konfiguriert ist, um MME Selektionsalgorithmen auszuführen und ein neues MME der vielfachen Backup MME auszuwählen.

12. Ein Computerspeichermedium mit darin gespeicherten Computerprogrammen für die Ausführung des Mobilitätsverwaltungsverfahrens gemäss jedem der Ansprüche von 1 bis 5.

**Revendications**

1. Procédé de gestion de mobilité, **caractérisé en ce que**, le procédé comprend :

l'acquisition, par un équipement de gestion de mobilité de travail, MME, d'informations de service à partir d'une instruction de service après réception de l'instruction de service (201) ;
la détermination d'un réseau sans fil contacté par chaque terminal dans un groupe de terminaux selon les informations de service acquises (202) ; et
l'appel d'un terminal dans le groupe de terminaux à exécuter un service demandé par un utilisateur selon le réseau sans fil contacté par chaque terminal dans le groupe de terminaux (203) ;
dans lequel le procédé comprend en outre :
lorsque le MME de travail a une défaillance ponctuelle, l'envoi (401) par le MME de travail d'une demande de remplacement à au moins un MME de secours et la commutation (406) d'un service actuel et du terminal exécutant le service demandé par l'utilisateur à l'au moins un MME de secours.

2. Procédé selon la revendication 1, comprenant en outre : avant (202) la détermination du réseau sans fil contacté par chaque terminal dans le groupe de terminaux, l'envoi, par le MME, d'une demande d'appel à chaque terminal dans le groupe de terminaux, la découverte d'un terminal dont la capacité de terminal satisfait une exigence d'exécution du service demandé par l'utilisateur selon une réponse à la demande d'appel provenant dudit terminal, et l'attente pour déterminer le réseau sans fil contacté.

3. Procédé selon la revendication 2, comprenant en outre : avant (203) l'appel du terminal dans le groupe de terminaux d'exécuter le service demandé par l'utilisateur, l'envoi, par le MME, d'une instruction d'émission de service à un serveur de réseau, et la réception de données de service émises par le serveur de réseau.

4. Procédé selon la revendication 1, comprenant en outre : en cas d'interruption de service du terminal exécutant le service demandé par l'utilisateur dans le groupe de terminaux, l'appel d'autres terminaux dans le groupe de terminaux de continuer l'exécution du service demandé par l'utilisateur.

5. Procédé selon la revendication 1, dans lequel (202) la détermination du réseau sans fil contacté par chaque terminal dans le groupe de terminaux comprend :

   le calcul de degrés de concordance avec des réseaux actuels selon les informations de service acquises ;
   la collecte d'informations d'intensité de signal et de retard de chaque réseau sans fil en tant que paramètres acquis ;
   l'acquisition d'un paramètre de décision pour un accès réseau à partir des degrés de concordance et des paramètres acquis d'après une théorie de logique floue ; et
   la détermination du réseau sans fil contacté par chaque terminal selon le paramètre de décision.

6. Equipement de gestion de mobilité, MME, **caractérisé en ce que**, le MME comprend : un module d'acquisition d'informations de service (601), un module d'allocation de ressources de réseau (602) et un module d'appel de terminal (603), dans lequel
   le module d'acquisition d'informations de service (601) est configuré pour acquérir des informations de service à partir d'une instruction de service après réception de l'instruction de service ;
   le module d'allocation de ressources de réseau (602) est configuré pour déterminer un réseau sans fil contacté par chaque terminal dans un groupe de terminaux selon les informations de service acquises par le module d'acquisition d'informations de service (601) ; et
   le module d'appel de terminal (603) est configuré pour appeler un terminal dans le groupe de terminaux à exécuter un service demandé par un utilisateur selon le réseau sans fil contacté par chaque terminal dans le groupe de terminaux, le réseau sans fil contacté par chaque terminal dans le groupe de terminaux étant déterminé par le module d'allocation de ressources de réseau (602) ;
   dans lequel le MME est un MME de travail ou un MME de secours,
   dans lequel le MME de travail est configuré, lorsqu'une défaillance ponctuelle se produit, pour envoyer une demande de remplacement à l'au moins un élément de MME de secours, et commuter un service actuel et un terminal exécutant un service demandé par un utilisateur à l'au moins un élément de MME de secours.

7. MME selon la revendication 6, dans lequel le module d'acquisition d'informations de service (601) est en outre configuré, avant que le réseau sans fil contacté par chaque terminal dans le groupe de terminaux soit déterminé, pour envoyer une demande d'appel à chaque terminal dans le groupe de terminaux, trouver un terminal dont la capacité de terminal satisfait une exigence d'exécution du service demandé par l'utilisateur selon une réponse à la demande d'appel provenant dudit terminal, et attendre pour déterminer le réseau sans fil contacté.

8. MME selon la revendication 7, dans lequel le module d'acquisition d'informations de service (601) est en outre configuré, avant que le terminal dans le groupe de terminaux soit appelé pour exécuter le service demandé par l'utilisateur, pour envoyer une instruction d'émission de service à un serveur de réseau, et recevoir des données de service émises par le serveur de réseau.

9. MME selon la revendication 6, dans lequel l'opération selon laquelle le module d'allocation de ressources de réseau (602) détermine le réseau sans fil contacté par chaque terminal dans le groupe de terminaux comprend :

   le calcul de degrés de concordance avec des réseaux actuels selon les informations de service acquises ;
   la collecte d'informations d'intensité de signal et de retard de chaque réseau sans fil en tant que paramètres acquis ;
   l'acquisition d'un paramètre de décision pour un accès réseau à partir des degrés de concordance et des paramètres acquis d'après une théorie de logique floue ; et

la détermination du réseau sans fil contacté par chaque terminal selon le paramètre de décision.

10. Système de gestion de mobilité, comprenant :

- l'équipement de gestion de mobilité, MME de travail selon l'une quelconque des revendications 6 à 9, au moins un élément de MME de secours selon l'une quelconque des revendications 6 à 9 et au moins deux terminaux, dans lequel

l'au moins un élément de MME de secours est en outre configuré pour renvoyer une réponse à la demande de remplacement après réception de la demande de remplacement en provenance du MME de travail, acquérir des informations d'état d'exécution du service demandé par l'utilisateur après détermination que l'au moins un élément de MME de secours est sélectionné, reconfigurer un environnement d'exécution de terminal et une ressource réseau du service demandé par l'utilisateur, et continuer l'exécution du service demandé par l'utilisateur ; et
les au moins deux terminaux sont configurés pour exécuter le service demandé par l'utilisateur après avoir été appelé par le MME de travail ou le MME de secours.

11. Système selon la revendication 10, dans lequel, lorsqu'il y a de multiples éléments de MME de secours, le MME de travail est en outre configuré pour exécuter un algorithme de sélection de MME pour sélectionner de nouveaux MME à partir des multiples éléments de MME de secours.

12. Support de stockage d'ordinateur dans lequel sont stockés des programmes d'ordinateur pour exécuter le procédé de gestion de mobilité selon l'une quelconque des revendications 1 à 5.

Fig. 1

```
                        ┌─────────────────────┐
                        │   Network server    │
                        └─────────────────────┘
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
  Terminal side   ┌──────────┐  ┌──────────┐  ┌──────────┐
│                 │ MME 101  │  │ MME 102  │  │ MME 103  │   │
                  └──────────┘  └──────────┘  └──────────┘
│                                                            │
   ┌────────┐ ┌────────┐ ┌────────┐ ┌────────┐ ┌────────┐ ┌────────┐ ┌────────┐
│  │Terminal│ │Terminal│ │Terminal│ │Terminal│ │Terminal│ │Terminal│ │Terminal│ │
   │  104   │ │  105   │ │  106   │ │  107   │ │  108   │ │  109   │ │  110   │
│  └────────┘ └────────┘ └────────┘ └────────┘ └────────┘ └────────┘ └────────┘ │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

Fig. 2

```
                                                        ⌐201
┌─────────────────────────────────────────────────────┐
│  MME acquires service information from a service     │
│  instruction after receiving the service instruction │
└─────────────────────────────────────────────────────┘
                          │
                          ▼                             ⌐202
┌─────────────────────────────────────────────────────┐
│  A wireless network accessed by each terminal in a   │
│  terminal group is determined according to the acquired │
│                service information                    │
└─────────────────────────────────────────────────────┘
                          │
                          ▼                             ⌐203
┌─────────────────────────────────────────────────────┐
│  A terminal in the terminal group is invoked to execute a │
│  service requested by a user according to the wireless │
│  network accessed by each terminal in the terminal group │
└─────────────────────────────────────────────────────┘
```

Fig. 3

| Network server | MME102 | Terminal 107 | Terminal 108 |

301 a user sends a service request

302 a service instruction is sent to a terminal side

303 the service instruction is responded

304 a terminal invoking request is sent

304 a terminal invoking request is sent

305 the terminal invoking request is responded

305 the terminal invoking request is responded

306 accessed wireless networks are determined

306 accessed wireless networks are determined

307 a service issuing instruction is sent

308 service data is issued to the terminal side

309 a service is cooperatively executed

309 a service is cooperatively executed

EP 3 048 822 B1

Fig. 4

| Network server | MME101 | MME102 | MME103 |

401 MME replacement request

401 MME replacement request

402 response to replacement request

402 response to replacement request

403 an MME selection algorithm is executed

404 new MME is selected

405 confirmation is returned, and execution state information of a service is acquired

406 the state information of the service is sent

407 terminals and network resources are reconfigured

408 reconfigured information is registered and sent to a network side

Fig. 5

Target layer — Selection of new MME

Criterion layer — Service type | Network bandwidth | Equipment utilization rate | Time delay requirement | Cost information

Solution layer — MME102 | MME103

Fig. 6

```
                                    ┌─601
        ┌─────────────────────────┐
        │   service information    │
    ┌───│   acquisition module     │
    │   └──────────┬──────────────┘
    │              │                ┌─602
    │   ┌──────────┴──────────────┐
    │   │   network resource       │
    │   │   allocation module      │
    │   └──────────┬──────────────┘
    │              │                ┌─603
    │   ┌──────────┴──────────────┐
    │   │   terminal invoking      │
    └───│   module                 │
        └─────────────────────────┘
```

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013104147 A1

- US 2013189951 A1